# EUROPÄISCHE PATENTANMELDUNG

(11) **EP 3 034 940 A1**
(43) Veröffentlichungstag der Anmeldung: **22.06.2016**
(21) Anmeldenummer: 14199386.5
(22) Anmeldetag: 19.12.2014
(51) Int. Cl.: F23B 30/00, F23B 50/04

(54) **Festbrennstoffverbrennungsvorrichtung mit Brennstoffvorratsbehälter**

(71) Anmelder: Reinke, Waldemar, 90762 Fürth (DE)
(72) Erfinder: Reinke, Waldemar, 90762 Fürth (DE)
(74) Vertreter: Dr. Gassner & Partner mbB

(57) **Zusammenfassung**

Festbrennstoffverbrennungsvorrichtung mit einem Brennstoffvorratsbehälter (1) für einen in Form von Brennstoffstücken vorliegenden Festbrennstoff und einer Brennkammer (2) mit mindestens einer ersten Öffnung (6) zur Luftzufuhr und mindestens einer zweiten Öffnung (8) zum Entweichen von bei einer Verbrennung des Festbrennstoffs entstehender Wärme und entstehenden Abgasen, wobei der Brennstoffvorratsbehälter (1) bei bestimmungsgemäßem Gebrauch so angeordnet ist, dass die Brennstoffstücke durch Schwerkraft in die Brennkammer (2) gelangen und dort verbrennen können, wobei der Brennstoffvorratsbehälter (1) zumindest so luftdicht verschlossen ist, dass bei bestimmungsgemäßem Gebrauch keine oder zumindest keine wesentliche Verbrennung im Brennstoffvorratsbehälter (1) erfolgen kann, wobei bei bestimmungsgemäßen Gebrauch jeweils die erste Öffnung (6) unterhalb oder seitlich der Brennkammer (2) und die zweite Öffnung (8) seitlich der Brennkammer (2) angeordnet ist.

## Beschreibung

Die vorliegende Erfindung betrifft eine Festbrennstoffverbrennungsvorrichtung mit einem Brennstoffvorratsbehälter.

Festbrennstoffverbrennungsvorrichtungen sind seit vielen Jahren bekannt. Diese können mit verschiedenen Festbrennstoffen wie Kohle, Briketts, Holz oder Holzpellets betrieben werden. Beim typischen Aufbau einer Festbrennstoffverbrennungsvorrichtung, z. B. in der Ausführung als Grill oder Ofen, brennt der Festbrennstoff in einem dafür vorgesehenen Raum oder auf einem dafür vorgesehenen Rost. Wärme und Abgase können nach oben abgeführt werden. Der Festbrennstoff wird manuell zugeführt.

Für die Beschleunigung des Anzündens von Holzkohle zum Grillen sind Grillanzündkamine bekannt. Dabei handelt es sich um Gefäße, z. B. aus Aluminium, mit einem kleineren Durchmesser als der Gefäßhöhe, in die Holzkohle ggf. mit Anzündbeschleunigern (Grillanzünder) gefüllt wird und in denen die gesamte Holzkohle nach Entzündung unten liegender Holzkohlestücke durch einen Kamineffekt schnell entzündet und durchgeglüht wird.

Für einen Heizungs-Festbrennstoffkessel offenbart die Internetseite http://josef-iobst.de/feststoff einen Festbrennstoffkessel, welcher einen Füllschacht oberhalb eines Glutbettes aufweist. Der Brennstoff rutscht getrieben durch die Schwerkraft aus dem Füllschacht auf das Glutbett. Die Gasführung ist so gestaltet, dass die Luft von einer Seite des Glutbetts her, dem Glutbett von oben und von unten zugeführt wird und entstehendes Schwelgas-Luft-Gemisch an einer der einen Seite gegenüberliegenden Seite wieder derart abgeführt wird, dass die Hauptbrennkammer, hier eine Wirbelbrennkammer, seitlich des Glutbettes liegt.

WO 2008/030566 offenbart eine Heizvorrichtung zum Verbrennen von Pellets, welcher einen Pellet-Vorratsbehälter und einen darunterliegenden Primärbrennbereich aufweist. Der Primärbrennbereich wird vom Vorratsbehälter schwerkraftgetrieben gespeist. Ein Übergreifen der Flammen auf den Vorratsbehälter kann durch eine Isolier- und Kühlvorrichtung verhindert werden. Eine Gasführung erfolgt horizontal durch den Primärbrennbereich. Bei einer Ausgestaltung ist eine Abdeckung des Pellet-Vorratsbehälters vorgesehen. Eine weitere Ausgestaltung sieht eine Flammensperre oberhalb des Pellet-Vorratsbehälters vor.

Aufgabe der vorliegenden Erfindung ist eine technisch einfache, günstige Ausgestaltung für eine Festbrennstoffverbrennungsvorrichtung anzugeben, die ein verhältnismäßig langes Brennen des Festbrennstoffes gewährleistet, ohne dass manuell Festbrennstoff zugeführt werden muss.

Diese Aufgabe wird durch die Merkmale des Patentanspruchs 1 gelöst. Ausgestaltungen der Erfindung ergeben sich aus den Merkmalen der Patentansprüche 2 bis 11.

Die Erfindung betrifft eine Festbrennstoffverbrennungsvorrichtung mit einem Brennstoffvorratsbehälter für einen in Form von Brennstoffstücken vorliegenden Festbrennstoff und einer Brennkammer mit mindestens einer ersten Öffnung zur Luftzufuhr und mindestens einer zweiten Öffnung zum Entweichen von bei einer Verbrennung des Festbrennstoffs entstehender Wärme und entstehenden Abgasen. Dabei ist der Brennstoffvorratsbehälter bei bestimmungsgemäßem Gebrauch so angeordnet, dass die Brennstoffstücke durch Schwerkraft in die Brennkammer gelangen und dort verbrennen können. Dabei und im Folgenden bedeutet "bei bestimmungsgemäßem Gebrauch", dass die Festbrennstoffverbrennungsvorrichtung so ausgerichtet ist, wie sie für eine sinnvolle Benutzung auszurichten ist. Insbesondere bedeutet dies, dass sie so ausgerichtet ist, dass die Brennstoffstücke durch Schwerkraft in die Brennkammer gelangen können.

Der Brennstoffvorratsbehälter ist zumindest so luftdicht verschlossen, dass bei bestimmungsgemäßem Gebrauch keine oder zumindest keine wesentliche Verbrennung im Brennstoffvorratsbehälter erfolgen kann. Bei bestimmungsgemäßem Gebrauch sind jeweils die erste Öffnung unterhalb oder seitlich der Brennkammer und die zweite Öffnung seitlich der Brennkammer angeordnet.

Der Festbrennstoff kann aus Kohle, Holzkohle, Briketts, Holzhackschnitzel oder zu Pellets gepresstem Festbrennstoff bestehen.

Die mindestens eine erste Öffnung zur Luftzufuhr der Brennkammer kann in einer Wand der Brennkammer oder im Boden der Brennkammer angeordnet sein. Der Boden kann als Rost ausgeführt sein, der mehrere der ersten Öffnungen aufweist. Die mindestens eine zweite Öffnung der Brennkammer zum Entweichen von bei einer Verbrennung des Festbrennstoffs entstehender Wärme und entstehenden Abgasen kann so angeordnet sein, dass eine Gasströmung von der ersten Öffnung zu der zweiten Öffnung möglich ist. Insbesondere liegt die zweite Öffnung bei bestimmungsgemäßen Gebrauch auf der gleichen Höhe oder oberhalb der ersten Öffnung. Bei auf einer Seite der Brennkammer angeordneter erster Öffnung kann die zweite Öffnung auf einer der einen Seite gegenüberliegende Seite angeordnet sein.

Die Festbrennstoffverbrennungsvorrichtung kann in der Brennkammer eine Mehrzahl zweiter Öffnungen aufweisen, die auf mehreren Seiten der Brennkammer angeordnet sind.

Die Brennkammer kann bei bestimmungsgemäßen Gebrauch nach unten hin durch einen eine Mehrzahl der ersten Öffnungen aufweisenden Rost geschlossen sein. Der Rost kann lösbar fixiert sein. Dadurch kann er nach Lösen von Befestigungsmitteln, z. B. zu Reinigungszwecken oder zum Nachfüllen des Brennstoffvorratsbehälters von der unteren Seite her, von der Brennkammer abgenommen werden. Die ersten Öffnungen des Rostes, der die Brennkammer nach unten hin abschließt, sind zweckmäßigerweise so klein, dass zwar keine oder allenfalls kleine - auch teilweise abgebrannte - Brennstoffstücke, Asche jedoch problemlos durch den Rost hindurch fallen können/kann. Die beim Abbrand der Brennstoffstücke entstehende Asche kann zum Beispiel im Bereich eines Ständers oder Fußes der Festbrennstoffverbrennungsvorrichtung gesammelt und nach dem Betrieb entfernt werden.

Die erste Öffnung und die zweite Öffnung können eine gemeinsame Öffnung bilden, von der jeweils ein erster Teil der Luftzufuhr zur Brennkammer und ein zweiter Teil dem Entweichen von bei der Verbrennung des Festbrennstoffs entstehender Wärme und entstehenden Abgasen dient.

Bei einer weiteren Ausführungsform der Erfindung sind die Brennkammer und der Brennstoffvorratsbehälter bei bestimmungsgemäßen Gebrauch direkt übereinander angeordnet und/oder aus einer Mehrzahl von Stücken zusammengesetzt. Dadurch kann die erfindungsgemäße Festbrennstoffverbrennungsvorrichtung zerlegt und dadurch verhältnismäßig einfach transportiert werden. Es ist auch möglich, dass der Brennstoffvorratsbehälter und die Brennkammer aus einem Stück gefertigt sind. Dadurch ist eine besonders kostengünstige Herstellung möglich. Bei einer weiteren Ausgestaltung der erfindungsgemäßen Festbrennstoffverbrennungsvorrichtung ist der Brennstoffvorratsbehälter mit einem oberen Abschluss versehen. Dieser Abschluss kann als aufgeschweißtes Blech oder als Deckel oder als Klappe ausgestaltet sein. Bei abgenommenem Deckel oder geöffneter Klappe können die Brennstoffstücke in den Brennstoffvorratsbehälter gefüllt werden. Die Brennstoffstücke können bei abgenommenem Deckel oder geöffneter Klappe in der Brennkammer entzündet werden. Durch den entstehenden Kamineffekt wird ein schnelles Entzünden der Brennstoffstücke in der Brennkammer erreicht. Bevor sich jedoch die Brennstoffstücke in dem Brennstoffvorratsbehälter entzünden wird der Deckel aufgesetzt oder die Klappe verschlossen und dadurch der Brennstoffvorratsbehälter wieder zumindest so luftdicht verschlossen, dass bei bestimmungsgemäßen Gebrauch keine oder zumindest keine wesentliche Verbrennung im Brennstoffvorratsbehälter erfolgen kann. Der Kamineffekt wird dadurch aufgehoben.

Der Brennstoffvorratsbehälter kann mindestens die 1,5-fache Höhe, insbesondere die 2 bis 4-fache Höhe, insbesondere die 2 bis 3-fache Höhe der Brennkammer aufweisen.

Bei einer Ausführungsform der Erfindung umfasst die Festbrennstoffverbrennungsvorrichtung einen Grill. Dabei kann die Brennkammer bei bestimmungsgemäßem Gebrauch zumindest teilweise unterhalb eines Grillrostes angeordnet sein. Beim Betrieb entstehende Verbrennungswärme kann das Grillgut, insbesondere auch direkt durch Strahlungswärme, erhitzen. Die Gesamthöhe dieser Ausführungsform kann zwischen 20 und 50 cm betragen. Der Bereich unterhalb der Brennkammer kann bei dieser Ausführungsform nur wenige Zentimeter hoch sein. Er kann einen als Hohlkörper ausgeführten Ständer mit mindestens einer weiteren Öffnung und einem an die Form des Grills angepassten Fuß zur Erhöhung der Standfestigkeit umfassen. Ein solcher Fuß ist jedoch nicht unbedingt erforderlich. Eine gute Standfestigkeit kann auch dadurch erreicht werden, dass der Brennstoffvorratsbehälter mit der Brennkammer durch eine genau daran angepassten Durchbruch im Grillrost ragt und dadurch vom Grillrost gehalten wird. Auch andere Fixierungen z. B. mittels Haltestangen sind möglich. Durch die weitere Öffnung im Ständer kann Luft zur ersten Öffnung gelangen. Eine Querschnittsfläche bei einem horizontal geführten Querschnitt durch die Festbrennstoffverbrennungsvorrichtung kann rund oder eckig sein.

Die erfindungsgemäße Festbrennstoffverbrennungsvorrichtung kann auch einen Räucherofen mit einer Räucherkammer oder einen Garofen mit einer Garkammer umfassen. Ein Garofen mit einer Garkammer, in welcher das zu garende Gut mittels heißem Rauch langsam durchgegart wird, wird allgemein als sogenannter "Smoker" bezeichnet. Bei einem solchen Garofen können der Brennstoffvorratsbehälter und die Brennkammer außerhalb der eigentlichen Garkammer angeordnet und mit der Garkammer durch eine Wärme- und Rauchzuführleitung oder -öffnung verbunden sein. Die Garkammer weist im Allgemeinen mindestens eine in ihrer Größe regulierbare Verbrennungsgasauslassöffnung zum Abzug des Rauchs auf. Mit einer solchen Vorrichtung kann ein Grillgut über viele Stunden beispielsweise zwischen 90 und 110 °C gegart werden.

Beim Garofen oder beim Räucherofen kann im oberen Bereich des Gehäuses der Garkammer oder der Räucherkammer jeweils eine, insbesondere in ihrer Größe regulierbare, Verbrennungsgasauslassöffnung zum Abzug des Rauchs bzw. von bei der Verbrennung des Festbrennstoffs entstehenden Abgasen vorgesehen sein. An dieser Verbrennungsgasauslassöffnung kann ein Wärmetauscher bzw. Wärmeübertrager, beispielsweise in Form eines langen gewundenen Ofenrohrs, zur Wärmeabgabe an Raumluft oder an eine Flüssigkeit angeschlossen sein.

Bei einer alternativen Ausgestaltung der Erfindung ist die Festbrennstoffverbrennungsvorrichtung als, insbesondere selbstständig stehender, Heizofen ausgestaltet. Ein solcher Heizofen kann z. B. zur Beheizung eines Gewächshauses genutzt werden. Er kann nach dem Befüllen der Brennkammer über viele Stunden oder sogar Tage Heizwärme abgeben.

An der mindestens einen zweiten Öffnung kann eine die mindestens eine zweite Öffnung umgebende eine Ausleitung aufweisende Ableitvorrichtung zum Ableiten und beim Vorhandensein mehrerer zweiter Öffnungen auch zum Sammeln der entstehenden Wärme und Abgase vorgesehen sein. An die Ausleitung kann ein Wärmetauscher bzw. Wärmeübertrager zum Erwärmen von Raumluft, beispielsweise in Form eines langen gewundenen Ofenrohrs, oder zum Erwärmen von Wasser angeschlossen sein.

Bei einer weiteren Ausführungsform weist die erfindungsgemäße Festbrennstoffverbrennungsvorrichtung einen als Hohlkörper ausgebildeten Ständer mit mindestens einer weiteren Öffnung auf. Durch die weitere Öffnung im Ständer kann Luft von außen eindringen und zur ersten Öffnung gelangen.

Der Ofen kann inklusive einem Ständer eine Höhe von 0,5 bis 2 m aufweisen. Im Bereich des Ständers unterhalb der weiteren Öffnung kann eine Sammelvorrichtung für Asche angeordnet sein, die zum Entleeren beispielsweise entnommen werden kann oder über eine zu öffnende Klappe zugänglich ist.

Nachfolgend wird die Erfindung anhand von Ausführungsbeispielen und Zeichnungen näher erläutert.

Es zeigen
- Fig. 1: eine schematische Darstellung einer einen Grill umfassenden erfindungsgemäßen Festbrennstoffverbrennungsvorrichtung,
- Fig. 2: eine schematische Querschnittsdarstellung der Festbrennstoffverbrennungsvorrichtung gemäß Fig. 1,
- Fig. 3: eine schematische Darstellung einer Ausgestaltung der erfindungsgemäßen Festbrennstoffverbrennungsvorrichtung als Ofen,
- Fig. 4: eine schematische Darstellung einer weiteren Ausgestaltung der erfindungsgemäßen Festbrennstoffverbrennungsvorrichtung mit einer eine gemeinsame Öffnung bildenden ersten und zweiten Öffnung,
- Fig. 5a, b: eine schematische Darstellung einer weiteren Ausgestaltung der erfindungsgemäßen Festbrennstoffverbrennungsvorrichtung mit einer unterhalb der Brennkammer liegenden weiteren Öffnung zur Luftzufuhr,
- Fig. 6a, b: eine schematische Darstellung einer weiteren Ausgestaltung der erfindungsgemäßen Festbrennstoffverbrennungsvorrichtung mit einer die zweiten Öffnungen umgebenden Ableitvorrichtung,
- Fig. 7: eine schematische Darstellung einer weiteren Ausgestaltung der erfindungsgemäßen Festbrennstoffverbrennungsvorrichtung mit einem daran angeschlossenen Wärmetauscher,
- Fig. 8: eine schematische Darstellung einer weiteren Ausgestaltung der erfindungsgemäßen Festbrennstoffverbrennungsvorrichtung mit einer daran angeschlossenen Garkammer und
- Fig. 9: eine weitere Ausgestaltung einer eine Garkammer umfassenden erfindungsgemäßen Festbrennstoffverbrennungsvorrichtung.

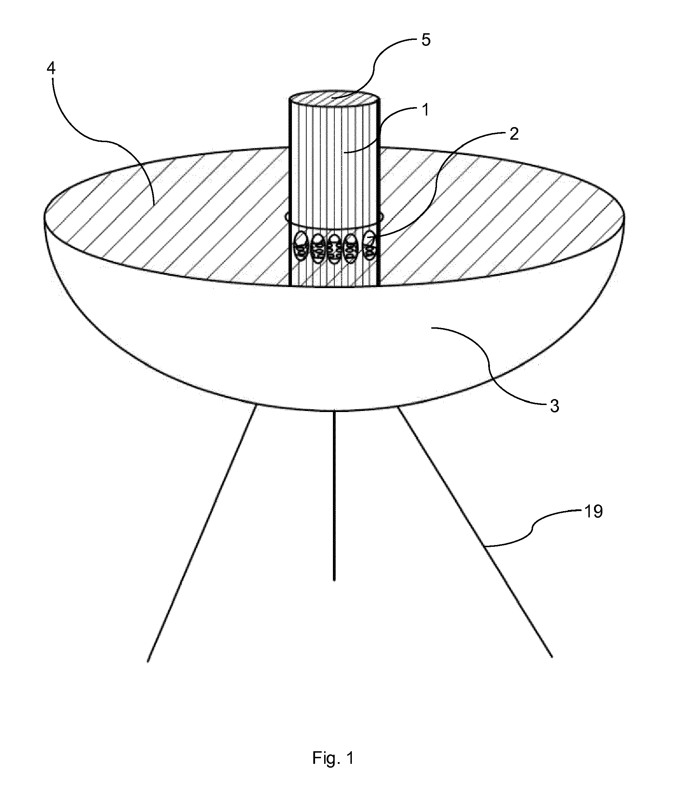

Fig. 1 zeigt eine einen Grill 3 mit drei Standbeinen 19 umfassende Ausführung der Festbrennstoffverbrennungsvorrichtung mit Brennstoffvorratsbehälter 1 sowie einer Brennkammer 2. Die Brennkammer 2 wird durch Schwerkraftbeschickung aus dem Brennstoffvorratsbehälter 1 gespeist. Die Brennkammer 2 liegt hier vollständig unterhalb des Grillrostes 4, so dass aus der Brennkammer 2 ausströmende Verbrennungswärme zur Erhitzung von Grillgut genutzt werden kann. Der Brennstoffvorratsbehälter 1 ist durch den oberen Abschluss 5 zumindest so luftdicht verschlossen, dass bei bestimmungsgemäßem Gebrauch keine wesentliche Verbrennung im Brennstoffvorratsbehälter 1 erfolgen kann. Insbesondere ist der Abschluss 5 so gestaltet, dass im Brennstoffvorratsbehälter 1 kein Kamineffekt entsteht.

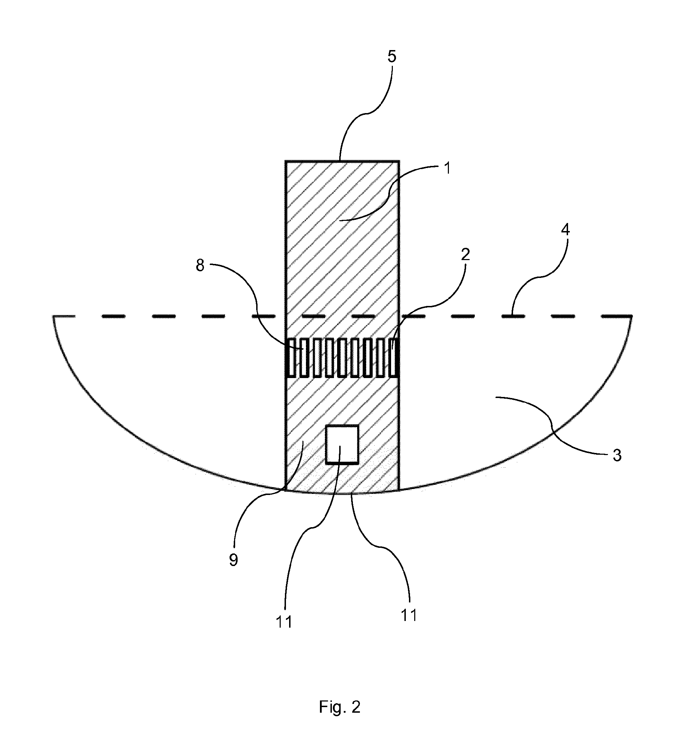

Fig. 2 zeigt einen Querschnitt der Festbrennstoffverbrennungsvorrichtung gemäß Fig. 1. Der Brennstoffvorratsbehälter 1 mit Abschluss 5 ist oberhalb des Grillrostes 4 angeordnet, während die Brennkammer 2 unterhalb des Grillrostes 4 angeordnet ist. Bei in der Brennkammer 2 erfolgender Verbrennung strömt Luft durch weitere Öffnungen 11 seitlich und unten in dem als Hohlkörper ausgestalteten Ständer 9 der Festbrennstoffverbrennungsvorrichtung und durch erste Öffnungen 6 in einem hier nicht dargestellten Rost 7, welcher die Brennkammer 2 nach unten hin abschließt, in die Brennkammer 2. Die weiteren Öffnungen 11 unten in dem Ständer 9 decken sich mit hier nicht dargestellten Durchbrüchen im Grill 3, so dass dadurch Luft durch die Durchbrüche in die weiteren Öffnungen 11 strömen kann. Durch zweite Öffnungen 8 auf der Seite der Brennkammer 2 gelangen die bei der Verbrennung des Festbrennstoffs entstehenden Abgase und Wärme nach außen.

Die zweiten Öffnungen 8 können an einer oder mehreren Seiten der Brennkammer vorhanden sein und z. B. durch ein Gitter gebildet werden. Zweckmäßigerweise umgeben die zweiten Öffnungen 8 die gesamte Brennkammer 2 seitlich.

Die Höhe der Festbrennstoffverbrennungsvorrichtung kann 20 bis 70 cm, insbesondere 30 bis 50 cm, betragen. Dabei kann die Höhe des Brennstoffvorratsbehälters 1 von 15 bis 30 cm betragen. Die Querschnittsfläche der Festbrennstoffverbrennungsvorrichtung kann bei einem horizontal geführten Schnitt rund oder eckig sein. Die Form der Querschnittsfläche im Bereich der Brennkammer 2 und des Brennstoffvorratsbehälters 1 und die Form des Grillostes 4 sind zweckmäßigerweise aufeinander abgestimmt, so dass kein Grillgut zwischen dem Grillrost 4 und der Brennkammer 2 oder dem Brennstoffvorratsbehälter 1 hindurch fallen kann. Der Durchmesser der Querschnittsfläche bzw. die Diagonale durch die Querschnittsfläche der Säule kann 10 bis 25 cm betragen.

Im Bereich des Ständers 9 unterhalb der weiteren Öffnung 11 ist zweckmäßigerweise eine hier nicht dargestellte Sammelvorrichtung für Asche angebracht, die eine, z. B. als offenbare Klappe ausgebildete, Entleerungsmöglichkeit aufweist.

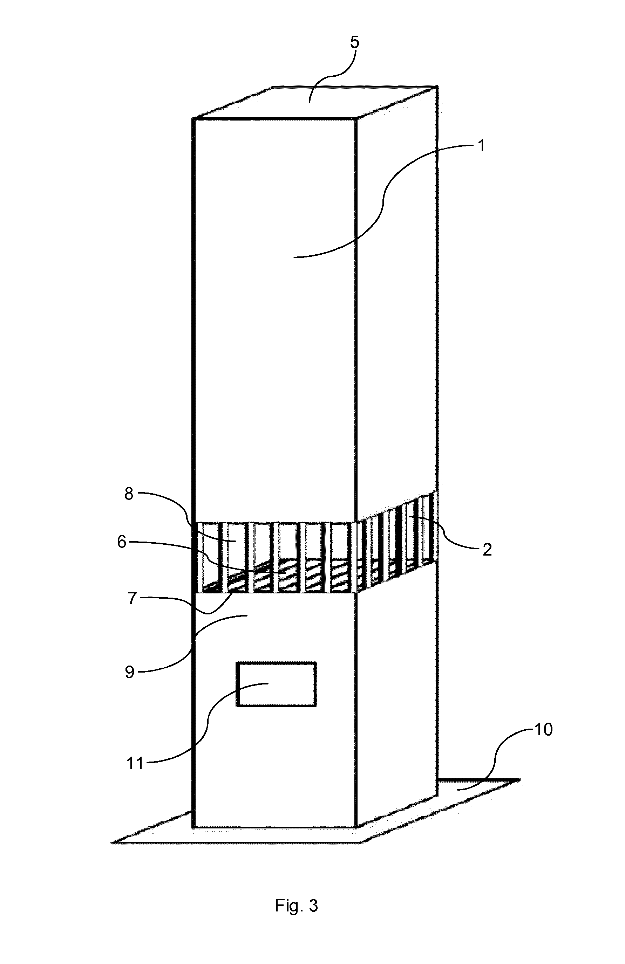

Fig. 3 zeigt eine alternative Ausführungsform der Erfindung als selbstständig stehender Heizofen z. B. zur Beheizung eines Gewächshauses oder als Heizofen auf einem Terrassenbereich. Der obere Abschluss 5 des Brennstoffvorratsbehälters 1 ist als Klappe, die ein Nachfüllen der Brennstoffstücke ermöglicht, ausgeführt. Die Brennkammer 2 liegt unterhalb des Brennstoffvorratsbehälters 1, so dass die Brennstoffstücke des Festbrennstoffs mittels Schwerkraft in die Brennkammer gelangen. Luft gelangt durch erste Öffnungen 6 im Rost 7, der dir Brennkammer von unten verschließt, in die Brennkammer 2. Durch die Verbrennung entstehende Gase entweichen durch die zweiten Öffnungen 8 aus der Brennkammer 2. Die zweiten Öffnungen 8 sind als Gitter in einer oder mehreren Seitenwänden der Brennkammer ausgeführt. Zweckmäßigerweise umfasst der Heizofen einen als Hohlkörper ausgeführten Ständer 9, der eine weitere Öffnung 11 aufweist, durch welche Luft zu den ersten Öffnungen 6 gelangen kann. Die weitere Öffnung 11 kann ein Gitter aufweisen. Um einen stabilen Stand der Festbrennstoffverbrennungsvorrichtung zu gewährleisten, ist der Ständer 9 mit einem Fuß 10 versehen. Der Ofen ist hier als Säule mit eckiger Querschnittsfläche bei horizontal geführtem Schnitt ausgeführt. Dabei beträgt die Höhe des Brennstoffvorratsbehälters 1 mindestens die 1,5-fache Höhe der Brennkammer 2. Zweckmäßigerweise beträgt die Höhe der Säule zwischen 0,5 bis 2 m. Die Säule kann so ausgebildet sein, dass sie zum Transport und/oder zu Wartungszwecken zwischen Ständer 9 und Brennkammer 2 bzw. zwischen Brennkammer 2 und Brennstoffvorratsbehälters 1 getrennt werden kann.

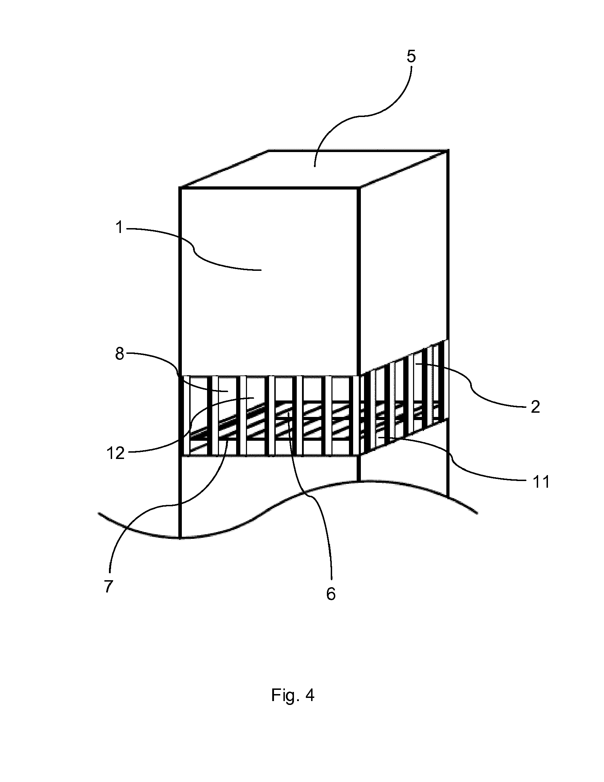

Fig. 4 zeigt eine alternative Ausgestaltung der Luftführung, die sowohl bei der Ausführungsform als Grill als auch bei der Ausführungsform als Heizofen möglich ist. Dabei sind weitere Öffnungen 11 und die zweiten Öffnungen 8 jeweils so miteinander vereint, dass gemeinsame Öffnungen 12 entstehen. Der Rost 7 mit darin enthaltenen ersten Öffnungen 6 teilt diese gemeinsamen Öffnungen 12 in einen die weiteren Öffnung 11 bildenden Bereich unterhalb des Rostes 7 und einen die zweiten Öffnungen 8 bildenden Bereich oberhalb des Rostes 7.

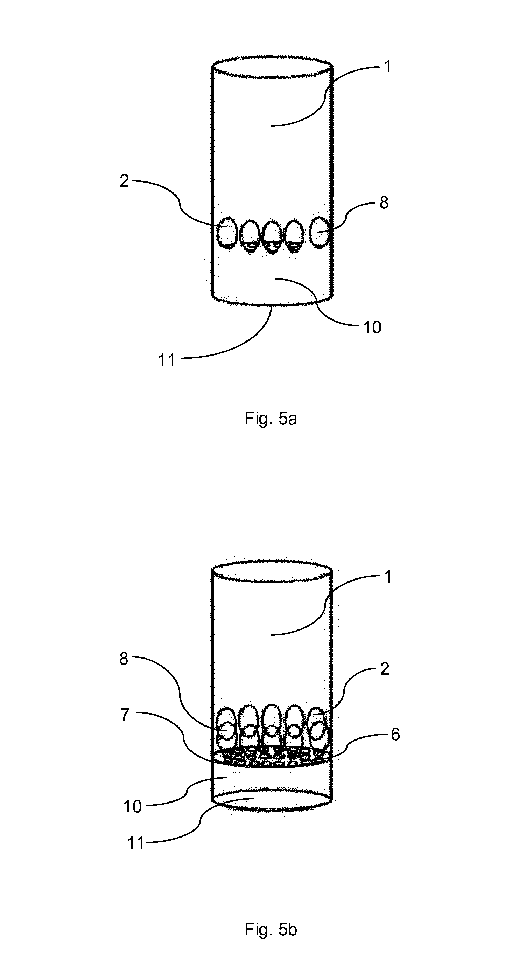

Fig. 5a zeigt eine als einfacher Heizofen, beispielsweise für den Betrieb auf einer Terrasse, ausgebildete erfindungsgemäße Festbrennstoffverbrennungsvorrichtung in einer Außenansicht. Fig. 5b zeigt diese Festbrennstoffverbrennungsvorrichtung schematisch mit einer transparent dargestellten Außenhülle. Die Festbrennstoffverbrennungsvorrichtung weist einen Brennstoffvorratsbehälter 1 und eine nach unten durch einen Rost 7 mit darin enthaltenen ersten Öffnungen 6 abgeschlossene Brennkammer 2 auf. Die Brennkammer 2 weist eine Mehrzahl zweiter Öffnungen 8 zum Entweichen von bei einer Verbrennung des Festbrennstoffs entstehender Wärme und entstehenden Abgasen auf. Direkt unterhalb des Rostes 7 befindet sich im Fuß 10 die weitere Öffnung 11 zum Zustrom von Luft zu den ersten Öffnungen 6. Der Brennstoffvorratsbehälter 1 ist auf seiner Oberseite abgeschlossen.

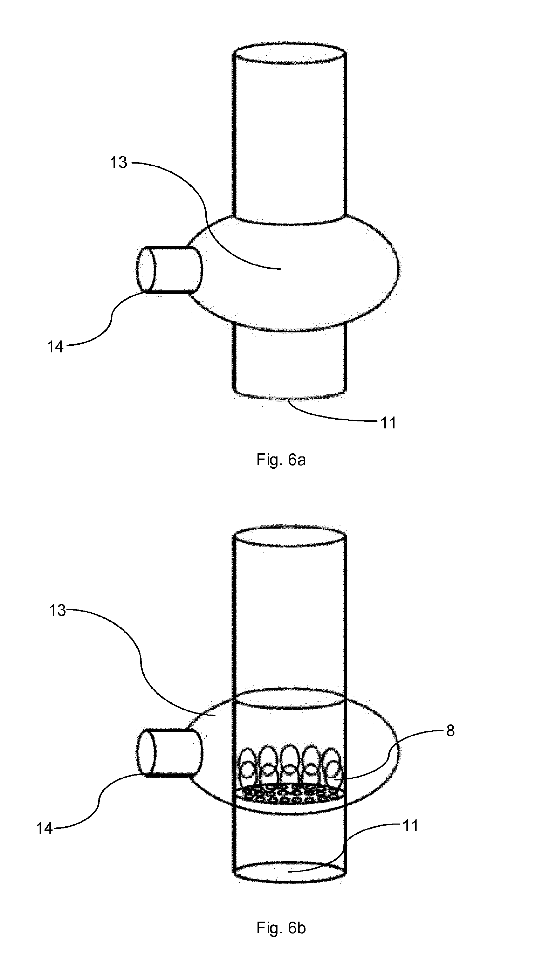

Fig. 6a und Fig. 6b zeigen eine Festbrennstoffverbrennungsvorrichtung, welche abgesehen von den Dimensionen der in den Figuren 5a und 5b dargestellten Vorrichtung entspricht, wobei Fig. 6b eine schematische Darstellung der in Fig. 6a dargestellten Vorrichtung mit transparent dargestellter Außenhülle ist. Die Vorrichtung gemäß der Figuren 6a und 6b unterscheidet sich von der Vorrichtung gemäß den Figuren 5a und 5b dadurch, dass die zweiten Öffnungen 8 von einer Ableitvorrichtung 13 zum Ableiten und Sammeln von bei der Verbrennung des Festbrennstoffs entstehender Wärme und entstehenden Abgasen, gasdicht umgeben sind. Zur Ableitung der Abgase ist eine Ausleitung 14 an der Ableitvorrichtung 13 vorgesehen.

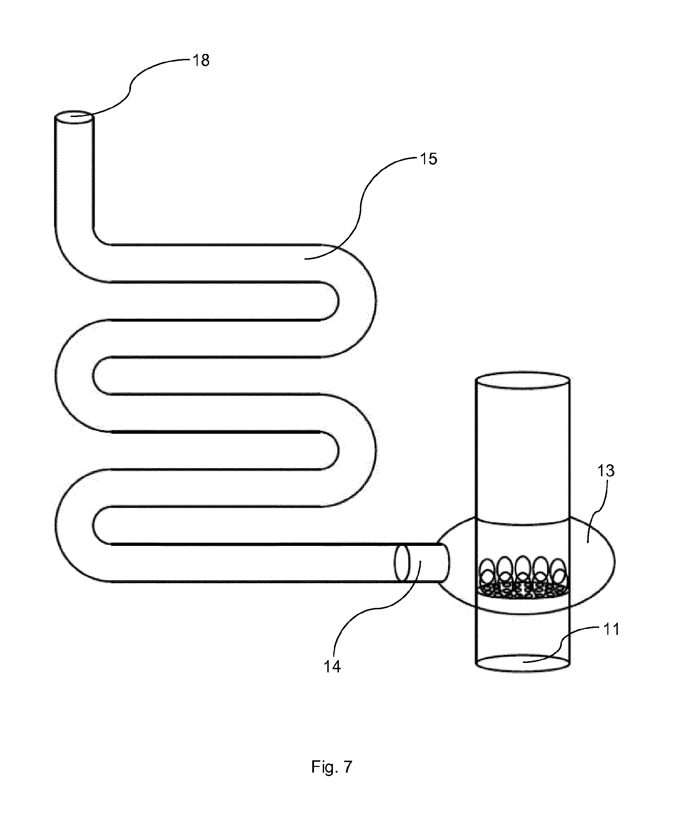

Fig. 7 zeigt die in den Figuren 6a und 6b dargestellte Vorrichtung mit einem an der Ausleitung 14 angeschlossenen Wärmetauscher 15. Der Wärmetauscher ist hier in Form eines langen Rohres dargestellt, welches die Wärme beispielsweise an den Wärmetauscher umgebende Raumluft abgeben kann. Alternativ kann ein solcher Wärmetauscher jedoch auch von einer Flüssigkeit umgeben sein, um diese Flüssigkeit zu erwärmen. Am oberen Ende des Wärmetauschers 15 ist eine Verbrennungsgasauslassöffnung 18 vorgesehen, die beispielsweise in einen Kamin münden oder selbst als Kamin ausgestaltet sein kann.

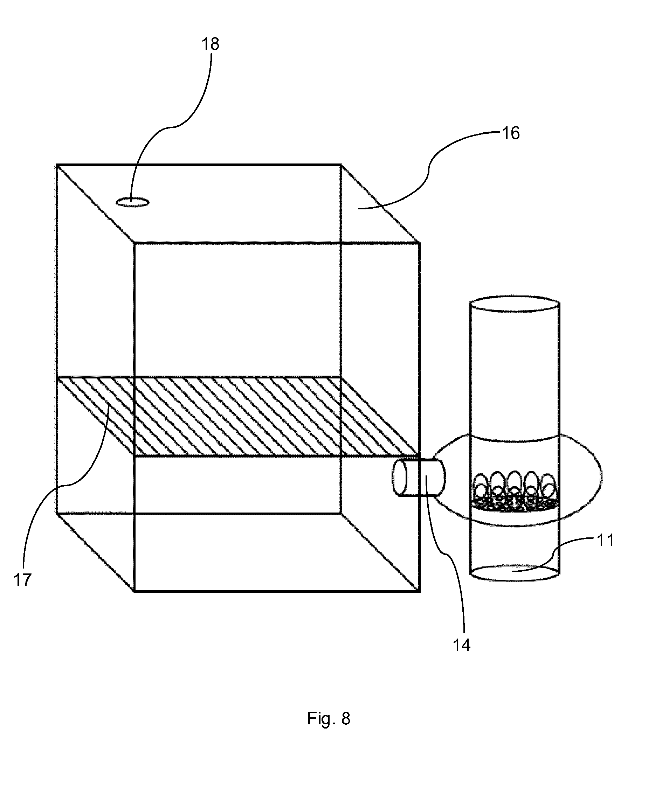

Fig. 8 zeigt die in den Figuren 6a und 6b dargestellte Vorrichtung, bei welcher die Ausleitung 14 in eine Garkammer 16 mündet. Die Garkammer 16 weist einen Garrost 17 und eine Verbrennungsgasauslassöffnung 18 auf. Die Verbrennungsgasauslassöffnung 18 weist eine hier nicht dargestellte Regulierungsvorrichtung zum regulieren der Größe des Durchlasses für das Verbrennungsgas auf. In einer solchen Garkammer kann ein Gargut, beispielsweise ein großes Stück Fleisch, über viele Stunden bei verhältnismäßig geringer Temperatur im Verbrennungsgas und in dem bei der Verbrennung entstehenden Rauch gegart werden. Ein solches Garen wird im Allgemeinen als "Smoken" bezeichnet.

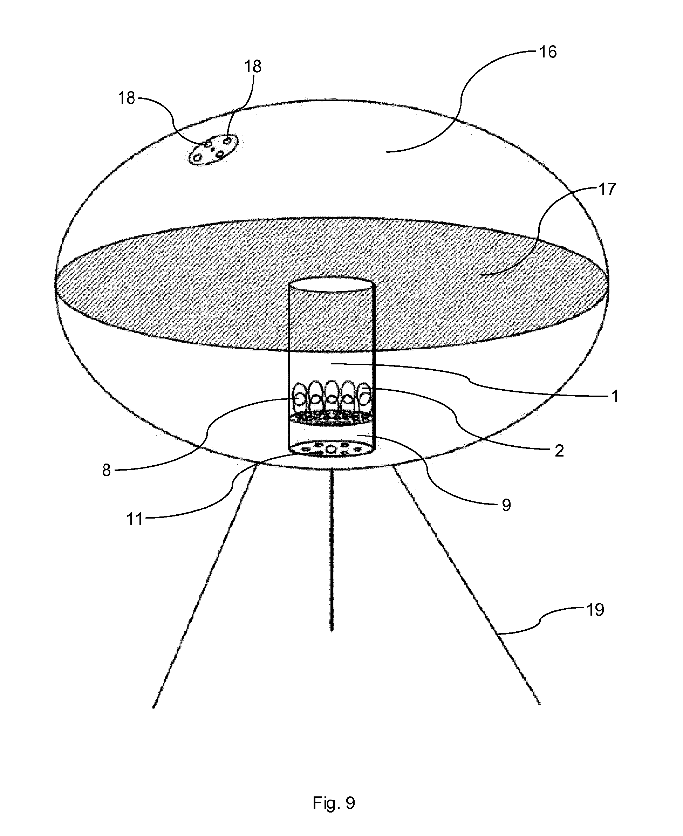

Fig. 9 zeigt eine alternative Ausgestaltung einer Gaskammer 16 mit einem Garrost 17, einer Mehrzahl von im Durchlass regulierbaren Verbrennungsgasauslassöff-nungen 18 und drei Standbeinen 19. In die Garkammer integriert ist der Brennstoffvorratsbehälter 1 mit der Brennkammer 2 und den zweiten Öffnungen 8. Unter der Brennkammer 2 ist ein Ständer 9 mit einer Mehrzahl weiter Öffnungen 11 angeordnet. Die weiteren Öffnungen 11 im Ständer 9 decken sich mit hier nicht dargestellten Öffnungen im Boden der Garkammer 16, so dass durch diese Öffnungen und die weiteren Öffnungen 11 Luft bis zu den hier nicht dargestellten ersten Öffnungen 6 im Rost 7 gelangen kann.

Der obere Teil der Garkammer 16 ist im Allgemeinen als hier nicht dargestellter abnehmbarer Deckel ausgebildet, um beispielsweise das Gargut auf den Garrost 17 legen zu können und den Festbrennstoff in den Brennstoffvorratsbehälter 1 einbringen zu können. Dazu kann der Brennstoffvorratsbehälter 1 an seiner Oberseite einen abnehmbaren, jedoch weitgehend luftdicht verschließbaren hier nicht dargestellten weiteren Deckel aufweisen.

### Bezugszeichenliste

- 1: Brennstoffvorratsbehälter
- 2: Brennkammer
- 3: Grill
- 4: Grillrost
- 5: Abschluss des Brennstofifvorratsbehälters
- 6: erste Öffnung
- 7: Rost
- 8: zweite Öffnung
- 9: Ständer
- 10: Fuß
- 11: weitere Öffnung
- 12: gemeinsame Öffnung
- 13: Ableitvorrichtung
- 14: Ausleitung
- 15: Wärmetauscher
- 16: Garkammer
- 17: Garrost
- 18: Verbrennungsgasauslassöffnung
- 19: Standbein

## Patentansprüche

1. Festbrennstoffverbrennungsvorrichtung mit einem Brennstoffvorratsbehälter (1) für einen in Form von Brennstoffstücken vorliegenden Festbrennstoff und einer Brennkammer (2) mit mindestens einer ersten Öffnung (6) zur Luftzufuhr und mindestens einer zweiten Öffnung (8) zum Entweichen von bei einer Verbrennung des Festbrennstoffs entstehender Wärme und entstehenden Abgasen, wobei der Brennstoffvorratsbehälter (1) bei bestimmungsgemäßem Gebrauch so angeordnet ist, dass die Brennstoffstücke durch Schwerkraft in die Brennkammer (2) gelangen und dort verbrennen können,
**dadurch gekennzeichnet,**
**dass** der Brennstoffvorratsbehälter (1) zumindest so luftdicht verschlossen ist, dass bei bestimmungsgemäßem Gebrauch keine oder zumindest keine wesentliche Verbrennung im Brennstoffvorratsbehälter (1) erfolgen kann, wobei bei bestimmungsgemäßen Gebrauch jeweils die erste Öffnung (6) unterhalb oder seitlich der Brennkammer (2) und die zweite Öffnung (8) seitlich der Brennkammer (2) angeordnet ist.

2. Festbrennstoffverbrennungsvorrichtung nach Anspruch 1, **dadurch gekennzeichnet, dass** die Brennkammer (2) eine Mehrzahl zweiter Öffnungen (8) aufweist, die auf mehreren Seiten der Brennkammer (2) angeordnet sind.

3. Festbrennstoffverbrennungsvorrichtung nach einem der vorhergehenden Ansprüche, **dadurch gekennzeichnet, dass** die Brennkammer (2) bei bestimmungsgemäßen Gebrauch nach unten hin durch einen, optional lösbar fixierten, eine Mehrzahl der ersten Öffnungen (6) aufweisenden Rost (7) abgeschlossen ist.

4. Festbrennstoffverbrennungsvorrichtung nach Anspruch 3, **dadurch gekennzeichnet, dass** die erste Öffnung (6) und die zweite Öffnung (8) eine gemeinsame Öffnung (12) bilden, von der jeweils ein erster Teil der Luftzufuhr zur Brennkammer und ein zweiter Teil dem Entweichen von bei der Verbrennung des Festbrennstoffs entstehender Wärme und entstehenden Abgasen dient.

5. Festbrennstoffverbrennungsvorrichtung nach einem der vorhergehenden Ansprüche, **dadurch gekennzeichnet, dass** die Brennkammer (2) und der Brennstoffvorratsbehälter (1) bei bestimmungsgemäßen Gebrauch direkt übereinander angeordnet und/oder aus einer Mehrzahl von Stücken zusammengesetzt sind.

6. Festbrennstoffverbrennungsvorrichtung nach einem der vorhergehenden Ansprüche, **dadurch gekennzeichnet, dass** der Brennstoffvorratsbehälter (1) mit einem oberen Abschluss (5) versehen ist.

7. Festbrennstoffverbrennungsvorrichtung nach einem der vorhergehenden Ansprüche, **dadurch gekennzeichnet, dass** der Brennstoffvorratsbehälter (1) mindestens die 1,5-fache Höhe der Brennkammer (2) aufweist.

8. Festbrennstoffverbrennungsvorrichtung nach einem der vorhergehenden Ansprüche, **dadurch gekennzeichnet, dass** die Festbrennstoffverbrennungsvorrichtung einen Grill (3), einen Garofen mit einer Garkammer (16) oder einen Räucherofen mit einer Räucherkammer umfasst..

9. Festbrennstoffverbrennungsvorrichtung nach Anspruch 1 bis 7, **dadurch gekennzeichnet, dass** die Festbrennstoffverbrennungsvorrichtung als Heizofen ausgestaltet ist.

10. Festbrennstoffverbrennungsvorrichtung nach einem der vorhergehenden Ansprüche, **dadurch gekennzeichnet, dass** an der mindestens einen zweiten Öffnung (8) eine die mindestens eine zweite Öffnung (8) umgebende eine Ausleitung (14) aufweisende Ableitvorrichtung (13) zum Ableiten und beim Vorhandensein mehrerer zweiter Öffnungen (8) auch zum Sammeln der entstehenden Wärme und Abgase angeordnet ist.

11. Festbrennstoffverbrennungsvorrichtung nach einem der vorhergehenden Ansprüche, **dadurch gekennzeichnet, dass** die Festbrennstoffverbrennungsvorrichtung einen als Hohlkörper ausgebildeten Ständer (9) mit mindestens einer weiteren Öffnung (11) aufweist, durch die Luft von außen eindringen und zu der ersten Öffnung (6) gelangen kann.
